Europäisches Patentamt

European Patent Office

Office européen des brevets

(19)

(11) Publication number: **0 015 154**
A1

(12) **EUROPEAN PATENT APPLICATION**

(21) Application number: 80300517.2

(22) Date of filing: 22.02.80

(51) Int. Cl.³: **C 21 D 8/04**
**C 22 C 38/14, F 16 C 33/64**

(30) Priority: 23.02.79 GB 7906607

(43) Date of publication of application:
03.09.80 Bulletin 80/18

(84) Designated Contracting States:
DE FR GB

(71) Applicant: THE TORRINGTON COMPANY LIMITED
Torrington Avenue
Coventry West Midlands, CV4 9AE(GB)

(72) Inventor: Potter, Margaret
76 Craven Street
Coventry West Midlands, CV5 8DW(GB)

(72) Inventor: Warner, Philip Roy
127 Broad Lane
Coventry, West Midlands, CV5 9AL(GB)

(74) Representative: Couch, Bernard Charles et al,
W.P. THOMPSON & CO. Coopers Building Church Street
Liverpool L1 3AB(GB)

(54) Method of producing bearing cups by deep drawing.

(57) Bearing cups manufactured by deep-drawing and heat-treating sheet or strip steel having a higher carbon content have good strength but the deep-drawing step is difficult to carry out. If a low carbon content steel is used, the deep-drawing becomes easier but the heat-treating step does not produce a product having a satisfactorily high core strength.

The product is improved by using a sheet or strip steel consisting of iron, carbon, boron, manganese, silicon, aluminium and titanium. The utilization of a low carbon content steel containing boron produces bearing cups having good strength after the heat treatment step. The utilization of a higher carbon content steel containing boron produces bearing cups having strengths superior to those made from corresponding steels not containing boron and without increased manufacturing difficulties.

DESCRIPTION

"METHOD OF PRODUCING BEARING CUPS BY DEEP
DRAWING"

The present invention relates to a method of deep drawing steel bearing cups, for example, needle bearing cups.

Bearing cups may be manufactured from a sheet or strip metal, for example a steel, utilizing a deep-drawing process to form the cup shape and a subsequent heat treatment step to give the formed cup the desired strength. However, when a sheet or stip steel is used to form the bearing cup, it is observed that the most suitable steel to give good formation on the cup press, utilized in the deep-drawing process, is not the most suitable steel at the heat treatment stage and vice versa. For example, if a steel from which most of the carbon has been removed is used, the deep-drawing of the cup becomes relatively easy but this loss of carbon would render the heat treatment process futile. A bearing cup would be produced that would have little or no resistance to pressure in service.

Conversely, if extra carbon is added to the steel, for example to raise the carbon content to a level of 0.2% by weight or more, or if appreciable amounts of alloying elements such as nickel and chromium are added, the effect upon the heat treatment process would be dramatic. A very strong bearing cup would be formed. Unfortunately, apart from the higher cost of such a steel, it would be unsuitable for deep-drawing into precision bearing cups on the cup press due to a lack of flow properties.

In practice, a compromise between the above two extremes has been used where sufficient carbon and alloying elements are added to a steel to give a reasonably strong core in the formed cup after the heat treatment stage without rendering the drawability of the steel impracticable. For example, steels containing from 0.1 to 0.15% by weight carbon, from 0.2 to 0.4% by weight nickel and from 0.2 to 0.4% by weight chromium have been utilized. A steel containing approximately 0.12% by weight carbon, approximately 0.27% by weight nickel and approximately 0.32% by weight chromium may yield, on oil quenching, a bearing cup having a core strength of 52 to 60 tons/in$^2$ (803 to 927 MPa, MPa = mega Pascals).

Although the drawability of the steels mentioned in the preceding paragraph is not rendered impracticable, it has been found that the steel must be lubricated during the deep-drawing stage in order to prevent cracking and to preserve the dimensional tolerance. Such lubrication of the steel surface has been achieved by coating the steel, prior to deep-drawing, with copper or a phosphate or equivalent material.

The necessity of providing a lubricant coating on the steel is a disadvantage because it increases the raw material costs and also the subsequent processing costs. The subsequent processing costs are increased since it is the practice, at present, to remove the lubricant coating before the heat treatment step.

The necessity of providing a lubricant coating, e.g. a copper or phosphate coating, on the surface of the steel can be avoided if a steel having a lower carbon content, is used. For example, a steel with a carbon content of approximately 0.07% by weight, a nickel content of approximately 0.13% by weight and a chromium content of approximately 0.16% by weight would enable the lubricant coating to be dispensed with and a bearing cup would be produced having a lower core strength, e.g., of the order of 38 to 45 tons/in$^2$ (587 to 695 MPa), after heat treatment.

It would be a considerable economic advantage to a bearing manufacturer if the costs of raw materials and also the subsequent process costs could be reduced by avoiding the need to coat the steel with a lubricant such as copper or phosphate, whilst at the same time producing a bearing cup having a satisfactory core strength.

By practice of the present invention there may be provided a steel bearing cup having a satisfactory strength and which is produced without the use of a lubricant, for example copper or phosphate, coating on the steel.

By practice of the present invention there may also be provided a steel bearing cup having improved strength properties but which is produced using a steel coated with a lubricant such as copper or a phosphate.

According to the present invention there is provided a method of manufacturing a bearing cup by deep-drawing a sheet or strip steel to form a cup-shaped structure and subsequently subjecting said cup-shaped structure to a heat treatment step, characterised in that the steel used for the sheet or strip consists of iron, carbon, manganese, silicon, boron, aluminium and titanium together with incidental constituents and impurities.

The heat treatment step may, for example, be carried out at a temperature of from 840 to 900°C. A temperature of about 880°C is particularly preferred for the heat treatment step.

The boron, which is present in the steel used in accordance with the present invention, may be present in an amount of from 0.001 to 0.004% by weight, for example from 0.0015 to 0.003% by weight.

The titanium content of the steel used in accordance with the present invention may be up to 0.1% by weight, for example 0.03 to 0.05% by weight, and the aluminium content of the steel may be up to 0.1% by weight, for example from 0.02 to 0.06% by weight.

Th carbon content of the steel utilized in the present invention is typically from 0.05 to 0.15% by weight.

If the carbon content of the steel utilized is in the range of from 0.1 to 0.15% by weight, then the steel should be provided with a lubricant coating, for example a copper or phosphate coating, prior to the deep-drawing stage since otherwise difficulties may be encountered during the deep-drawing stage.

The utilization of a steel in accordance with the present invention and having a carbon content in the range of from 0.1 to 0.15% by weight will produce a bearing cup having a high core strength, for example a core strength exceeding 75 tons/in$^2$ (1160 MPa) whereas a similar steel but without the addition of boron may only produce a bearing cup having a core strength of 48 to 65 tons/in$^2$ (741 to 1004 MPa).

If the carbon content of the steel utilized in the present invention is from 0.05 to 0.1% by weight, for example, 0.05 to 0.08% by weight, it is not necessary to provide a lubricant coating on the surface thereof prior to the deep-drawing step since it will form well in the cup press used for the deep-drawing and, despite the lower carbon content, will give a satisfactory core strength after the heat treatment stage. In fact, the use of a lubricant coating on the surface of the sheet or strip steel may prove to be economically disadvantageous since it will increase the raw material costs and probably also increase the subsequent processing costs.

The manganese content of the steel used in the present invention may be up to 1.2% by weight, e.g., from 0.3 to 1.2% by weight, and preferably from 0.3 to 0.6% by weight.

The silicon content of the steel used in accordance with the present invention may be from 0.1 to 0.25% by weight.

- 5 -

In addition to containing iron, carbon, manganese, silicon, aluminium, titanium and boron, the steel used in accordance with the present invention may also contain one or more incidental impurities such as sulphur, phosphorous, nickel, chromium, copper or molybdenum. For example, when present in the steel, sulphur may be present in an amount of up to 0.025% by weight, phosphorous may be present in an amount of up to 0.025% by weight, nickel may be present in an amount of up to 0.4% by weight, e.g., up to 0.2% by weight, chromium may be present in an amount of up to 0.4% by weight, e.g., up to 0.2% by weight, copper may be present in an amount of up to 0.35% by weight, and molybdenum may be present in an amount of up to 0.1% by weight. If desired, steels may be used having a nickel content of from 0.2 to 0.4% by weight and/or a chromium content of from 0.2 to 0.4% by weight.

The above-mentioned incidental impurities are not always added intentionally to the steel but may be unavoidably present.

The following three compositions (A, B and C) illustrate steel compositions suitable for use in the present invention. In each of the compositions the percentages are by weight based on the total weight of the steel:

Composition A:-

| | |
|---|---|
| Carbon | 0.05 - 0.1% |
| Manganese | 0.3 - 1.2% |
| Silicon | 0.1 - 0.25% |
| Aluminium | Up to 0.1% |
| Titanium | Up to 0.1% |
| Boron | 0.001 - 0.004% |

remainder, apart from any incidental impurities, iron.

- 6 -

Composition B:-

| | |
|---|---|
| Carbon | 0.05 - 0.08% |
| Manganese | 0.3 - 0.6% |
| Silicon | 0.1 - 0.25% |
| Aluminium | 0.02 - 0.06% |
| Titanium | 0.03 - 0.05% |
| Boron | 0.0015 - 0.003% |

remainder, apart from any incidental impurities, iron.

Composition C:-

| | |
|---|---|
| Carbon | 0.1 - 0.15% |
| Manganese | Up to 1.2% |
| Aluminium | Up to 0.1% |
| Titanium | Up to 0.1% |
| Boron | 0.001 - 0.004% |
| Silicon | 0.1 - 0.25% |
| Nickel | 0.2 - 0.4% |
| Chromium | 0.2 - 0.4% |

remainder, apart from any incidental impurities, iron.

The incidental impurities which may be present in compositions A and B above may comprise one or more of the following materials in the amounts indicated. Percentages quoted are percentages by weight based on the total weight of the steel:

| | |
|---|---|
| Sulphur | 0.025% maximum |
| Phosphorous | 0.025% maximum |
| Nickel | 0.2% maximum |
| Chromium | 0.2% maximum |
| Copper | 0.35% maximum |
| Molybdenum | 0.1% maximum |

The incidental impurities which may be present in composition C above may comprise one or more of the following materials in the amounts indicated. Again, percentages quoted are percentages by weight based on the total weight of the steel:

| | |
|---|---|
| Sulphur | 0.025% maximum |
| Phosphorous | 0.025% maximum |
| ·ɔpper | 0.35% maximum |
| Molybdenum | 0.1% maximum |

Compositions A and B above have a carbon content of from 0.05 to 0.1% by weight and may, therefore, be used to produce a bearing cup having a satisfactory core strength without the need to provide a lubricant coating, such as a copper or phosphate coating, on the surface of the steel before the deep-drawing step. Composition C, however, has a carbon content of from 0.1 to 0.15% by weight and a lubricant coating should be provided on the surface of the steel strip or sheet prior to deep-drawing.

A commercially available steel which may be modified to produce a steel suitable for use in the present invention is SAE 1012.

It has been found that boron, in very low concentrations, may produce a substantial increase in the hardenability of steel at the heat treatment, for example quenching, stage. That is to say, the depth to which hardening will occur when the steel is heat treated will increase for certain steels when boron is added. This same effect can also be achieved by adding appreciable amounts of alloy elements such as nickel and chromium. For example, to achieve the same hardenability effect as adding from 0.001 to 0.004% by weight of boron, greater concentrations of nickel and chromium (above 0.2% by weight) would be necessary. However, such concentrations of nickel and chromium would reduce the drawability of the steel. The hardenability effect attained by adding boron to the steel allows the carbon content of the steel to be reduced without forfeiting the hardening depth of the steel, provided the amount of boron present is controlled. Alternatively, a bearing cup having an increased strength may be produced when the carbon content of the steel is not reduced, e.g., the carbon content is in the range of from 0.1 to 0.15% by weight, and a controlled amount of boron is present.

The presence of titanium and aluminium in the steel is necessary in order to assist the boron to fulfil its hardenability function by offsetting the detrimental effect to the boron of nitrogen which may also be present in the steel.

In conclusion, by reducing the carbon content of a steel to below 0.1% by weight and adding boron (with other protective elements such as aluminium and titanium), a superior steel for bearing cup manufacture may be produced. This steel would form well in the cup press used in the deep-drawing process without the need for a lubricant coating, for example a copper or phosphate coating, and, despite the lower carbon content, would give a satisfactory core strength at the heat treatment stage. The lower carbon content of the steel would promote easier manufacture of the bearing cup, whereas the boron would give the cup a satisfactory core strength after heat treatment. An equivalent steel but without boron would not achieve a satisfactory core strength. For example, a steel having 0.07% by weight carbon, 0.13% by weight nickel, and 0.16% by weight chromium would give, after heat treatment, a core strength of only of the order of 38-45 tons/in$^2$ (587 to 695 MPa) and this low core strength would produce a weak bearing cup although the steel would not require a lubricant coating for drawing.

By utilizing a steel having a carbon content of from 0.1 to 0.15% by weight and adding boron, a bearing cup may be produced having a core strength superior to that which could be obtained by utilizing a similar steel but without added boron. However, a lubricant coating should be used, in this embodiment, during the drawing stage. In heavy load applications this increased core strength may give a considerable extension to the bearing life.

## CLAIMS

1. A method of manufacturing a bearing cup by deep-drawing sheet or strip steel to form a cup-shaped structure and subsequently subjecting said cup-shaped structure to a heat treatment step, characterised in that the steel used for the sheet or strip consists of iron, carbon, manganese, silicon, boron, aluminium and titanium, together with incidental constituents and impurities.

2. A method as claimed in claim 1, characterised in that the boron content of the steel is from 0.001 to 0.004% by weight.

3. A method as claimed in claim 2, characterised in that the boron content of the steel is from 0.0015 to 0.003% by weight.

4. A method as claimed in claim 1, 2 or 3, characterised in that the titanium content of the boron-containing steel is up to 0.1% by weight.

5. A method as claimed in claim 4, characterised in that the titanium content of the steel is from 0.03 to 0.05% by weight.

6. A method as claimed in any of claims 1 to 5, characterised in that the aluminium content of the boron-containing steel is up to 0.1% by weight.

7. A method as claimed in claim 6, characterised in that the aluminium content of the steel is from 0.02 to 0.06% by weight.

8. A method as claimed in any of claims 1 to 7, characterised in that the carbon content of the boron-containing steel is from 0.05 to 0.15% by weight.

9. A method as claimed in claim 8, characterised in that the carbon content of the steel is from 0.1 to 0.15% by weight.

10. A method as claimed in claim 8, characterised in that the carbon content of the steel is from 0.05 to 0.1% by weight.

11. A method as claimed in claim 10, characterised in that the carbon content of the steel is from 0.05 to 0.08% by weight.

12. A method as claimed in any of claims 1 to 11, characterised in that the manganeses content of the boron-containing steel is up to 1.2% by weight.

13. A method as claimed in claim 12, characterised in that the manganese content of the steel is from 0.3 to 1.2% by weight.

14. A method as claimed in claim 13, characterised in that the manganese content of the steel is from 0.3 to 0.6% by weight.

15. A method as claimed in any of claims 1 to 14, characterised in that the silicon content of the boron-containing steel is from 0.1 to 0.25% by weight.

16. A method as claimed in any of claims 1 to 15, characterised in that the heat treatment step is carried out at a temperature of from $840^{\circ}$ to $900^{\circ}C$.

0015154

European Patent Office

**EUROPEAN SEARCH REPORT**

Application number

EP 80 30 0517

| | DOCUMENTS CONSIDERED TO BE RELEVANT | | CLASSIFICATION OF THE APPLICATION (Int. Cl. ) |
|---|---|---|---|
| Category | Citation of document with indication, where appropriate, of relevant passages | Relevant to claim | |
| A | GB - A - 1 419 552 (NIPPON STEEL CORP.)<br>* Claims 1,8,9 *<br><br>-- | | C 21 D 8/04<br>C 22 C 38/14<br>F 16 C 33/64 |
| A | FR - A - 2 129 320 (NIPPON KOKAN K.K.)<br>* Revendication 1 *<br><br>-- | | |
| A | GB - A - 1 333 280 (NIPPON KOKAN K.K.)<br>* Claims 1,3 *<br><br>-- | | **TECHNICAL FIELDS SEARCHED (Int.Cl. )**<br><br>F 16 C 33/62<br>F 16 C 33/64<br>C 22 C 38/14 |
| A | DE - A - 2 133 744 (AUGUST THYSSEN-HUETTE)<br>* Claim 1 *<br><br>---- | | |

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 05-06-1980 | LIPPENS |

EPO Form 1503.1 06.78